# EUROPÄISCHE PATENTSCHRIFT

(11) **EP 2 377 649 B1**
(45) Veröffentlichungstag und Bekanntmachung des Hinweises auf die Patenterteilung: **16.09.2015**
(21) Anmeldenummer: 10003976.7
(22) Anmeldetag: 15.04.2010
(51) Int. Cl.: B24C 11/00, B24C 9/00

(54) **Strahlmittel und Strahlverfahren**
Abrasive and abrasive method
Agent de rayonnement et procédé de rayonnement

(43) Veröffentlichungstag der Anmeldung: 19.10.2011
(60) Teilanmeldung: 15000964.5
(73) Patentinhaber: KOMPOFERM GmbH, 33428 Marienfeld (DE)
(72) Erfinder: Halstenberg, Jörg, 32549 Bad Oeynhausen (DE)
(74) Vertreter: Schober, Mirko

(56) Entgegenhaltungen:
- EP-A1- 0 612 585
- WO-A2-2009/016448
- US-A- 5 591 064
- US-A- 5 827 114

## Beschreibung

Die Erfindung betrifft ein Strahlmittel und ein Strahlverfahren.

Strahlverfahren sind aus dem Stand der Technik bekannt. Ihnen gemeinsam ist, dass ein Mittel zur mechanischen Bearbeitung von Oberflächen (in Folgenden auch: eigentliches Strahlmittel), bei dem es sich in der Regel um ein granulares Material handelt, auf eine zu strahlende Oberfläche geschossen wird. Unter granularem Material ist ein granulares Material im weitesten Sinne zu verstehen, d. h. ein Material, das aus Partikeln mit einer definierten Größenverteilung besteht, wobei auch symmetrisch geformte Partikel, beispielsweise Kugeln, im Folgenden als granulares Material zu verstehen sind. Die Form, die Größenverteilung und das Material, aus dem die Granulate bestehen, werden dabei entsprechend dem Material des zu bearbeitenden Werkstücks und dem gewünschten Effekt des Strahlvorgangs auf das Werkstück ausgewählt. Zweck des Verfahrens kann es sein, eine Oberfläche von einer Altbeschichtung zu befreien, eine Oberfläche auf ein erneutes Lackieren vorzubereiten oder aber auch die Oberfläche zu polieren oder ihre mechanischen Eigenschaften zu verbessern.
Dementsprechend werden zum Beispiel häufig kantige granulare Materialien als Strahlmittel gewählt, wenn der Verfahrenszweck ein Materialabtrag von der Oberfläche oder eine Aufrauhung der Oberfläche ist oder runde granulare Materialien gewählt, wenn die Oberfläche poliert oder ihre mechanischen Eigenschaften verbessert werden sollen, beispielsweise beim sogenannten Kugelstrahlen. Prinzipiell ist jedoch auch ein Materialabtrag mit dem Einsatz von runden granularen Materialien möglich.

Als Strahlmittel kommen eine Vielzahl von Materialien, beispielsweise Stahl, Guss, Korund, Glas, Granatsand, allerdings - je nach Anwendungszweck - auch exotischere Stoffe wie zerkleinerte Nussschalen zum Einsatz. Die Körnung schwankt dabei typischerweise zwischen 0,1 und 3 mm.

Problematisch bei herkömmlichen Strahlverfahren sind Werkstücke, die an ihren zu strahlenden Oberflächen Fette, Öle, Silikonölschichten, Trennmittelrückstände oder ähnliche Substanzen aufweisen. Da das Strahlmittel in Strahlanlagen typischerweise in einem Kreisprozess geführt und wiederverwendet wird, kommt es bei solchen Werkstücken zu einer Anreicherung der Verunreinigungen im Strahlmittel, was einen erhöhten Reinigungsaufwand der Strahlanlage und des Strahlmittels verursacht. Aus diesem Grund wird häufig eine Vorreinigung der Werkstücke vom Strahlanlagenherstellern vorgeschrieben, welche aufgrund der verwendeten Lösungsmittel erhebliche Gesundheits- und Umweltrisiken beinhaltet und dementsprechend zusätzliche Kosten verursacht.

Die US 5,591,064 A offenbart eine Vorrichtung und ein Verfahren zum Strahlen von Oberflächen, bei dem es möglich ist, unterschiedliche Abrasivstoffe während des Strahlvorgangs zusammen zu mischen. Hierfür wird eine spezielle Strahldüse verwendet. Dies ermöglicht es zwar, auch stark verschmutzte empfindliche Oberflächen zufriedenstellend zu reinigen, ohne diese zu beschädigen, das vorstehend beschriebene Problem der nachhaltigen Verschmutzung des Strahlmittels besteht jedoch weiterhin.

Der Erfindung liegt daher die Aufgabe zugrunde, ein Strahlverfahren und Hilfsmittel zu dessen Durchführung anzugeben, welches bei der Bearbeitung von Werkstücken, welche die oben beschriebenen Verunreinigungen aufweisen, effizienter, umweltfreundlicher und gesundheitssowie sicherheitstechnisch unbedenklich ist.

Gelöst wird die Aufgabe durch ein Strahlmittel nach Anspruch 1 und ein Strahlverfahren nach Anspruch 3. Die Unteransprüche betreffen vorteilhafte Ausführungsformen.

Erfindungsgemäß wird ein Strahlmittel verwendet, das neben wenigstens einem Mittel zur mechanischen Bearbeitung von Oberflächen (im Folgenden: eigentliches Strahlmittel) ein Additiv enthält, welches für die Entfettung und Reinigung der zu strahlenden Oberfläche und des Strahlmittels zuständig ist. Erfindungsgemäß ist das Additiv dabei ebenfalls ein granulares Material, welches unter den mechanischen Beanspruchungen, denen das Strahlmittel während des Strahlverfahrens unterliegt, eine geringere Bruchfestigkeit aufweist als das eigentliche Strahlmittel selbst. Dabei ist unter Bruchfestigkeit die Fähigkeit der Granulate, beim Auftreffen auf die zu strahlende Oberfläche mit einer für das Strahlverfahren typischen Aufprallgeschwindigkeit nicht zu zerbrechen, zu verstehen.

Besonders vorteilhaft ist die erfindungsgemäße Verwendung des Additivs bei der Verwendung von Stahl- oder Gussperlen als eigentlichem Strahlmittel, da diese selbst nur einen minimalen Eigenabrieb aufweisen.

Dies hat zur Folge, dass während des Strahlverfahrens und des Transportes des Strahlmittels innerhalb der Anlage, beispielsweise über Transportschnecken oder Becherwerke, was die Granulate des eigentlichen Strahlmittels typischerweise unbeschadet überstehen, die Granulate des Additivs zerkleinert werden. Durch die Zerkleinerung erhöht sich die relative Oberfläche des Additivs um ein Vielfaches, so dass der weitaus größte Teil der an der Oberfläche des Werkstücks vorhandenen Verunreinigungen nicht an den Granulaten des eigentlichen Strahlmittels, sondern an den zerkleinerten Granulaten des Additivs haften bleibt. Die zerkleinerte Fraktion kann so in einfacher Weise durch ein partikelgrößenselektives Trennverfahren aus der Strahlmittelmischung entfernt werden, wodurch die Verunreinigungen in einfacher Weise aus dem Prozess ausgeschleust werden können. Dies kann beispielsweise durch Windsichten oder die Verwendung klassierender Zyklonabscheider erfolgen, bei welchen die Strahlmittelmischung in eine Fraktion, die im Wesentlichen das eigentliche Strahlmittel und noch unzerkleinerte Bestandteile des Additivs enthält, und eine Fraktion, welche die mit den Verunreinigungen belasteten zerkleinerten Bestandteile des Additivs sowie weitere feinkörnige Verunreinigungen, wie beispielsweise Abrieb von Werkstück- oder den Granulaten des eigentlichen Strahlmittels enthält, aufgeteilt wird. Während die erste Fraktion typischerweise dem Strahlverfahren wieder zugeführt wird, wird die zweite Fraktion beispielsweise in Filtern abgeschieden und kann einem zweckmäßigen Entsorgungsprozess zugeführt werden.

Da das Additiv bei diesen Verfahren aufgebraucht wird, nimmt bei der für Strahlanalgen typischen Kreislaufführung des Strahlmittels der Anteil des Additivs im Strahlmittel stetig ab. Daher ist es vorteilhaft, eine Vorrichtung zur dosierten Zuführung des Additivs vorzusehen, wobei die dosierte Zuführung vorteilhafterweise derart gesteuert wird, dass das Mengenverhältnis zwischen Additiv und dem eigentlichen Strahlmittel in dem im Kreislauf geführten Strahlmittel möglichst geringen Schwankungen unterliegt, idealerweise konstant bleibt.

Besonders vorteilhaft erweist sich der Einsatz des erfindungsgemäßen Strahlmittels und des erfindungsgemäßen Strahlverfahrens in Verbindung mit Schleuderradstrahlanlagen. Bei dieser Bauform der Strahlanlage wird das Strahlmittel nicht durch einen Luftstrom beschleunigt, wie es in einem Großteil der Strahlanlagen üblich ist, sondern die Granulate werden durch an einem rotierenden Rad angebrachte Flächen beschleunigt und gegen das Werkstück geschossen. Bei diesem Verfahren besteht bereits beim Auftreffen der Granulate auf die Flächen des Schleuderrads eine Prallbeanspruchung der Granulate, wodurch bereits vor dem Auftreffen auf das Werkstück eine Teilzerkleinerung des Additivs erfolgt.

Als Additiv eignen sich erfindungsgemäß alle jene Materialien, die als Granulate im eingangs beschriebenen Sinn vorliegen und eine geringe Bruchfestigkeit, zumindest eine geringere als das eigentliche Strahlmittel, unter den Bedingungen aufweisen, die beim Aufprall der Granulate auf die zu strahlende Oberfläche herrschen. Dabei kommen auch an sich harte Materialien in Frage, wenn diese aufgrund ihrer Sprödigkeit bei der beim Strahlverfahren auftretenden Prallbeanspruchung leichter zerbrechen als die Granulate des eigentlichen Strahlmittels, wenn diese eine höhere Duktilität aufweisen. So kommen als Additiv beispielsweise Salze oder Oxide in Frage, von denen besonderes das Siliziumoxid insbesondere in der natürlich vorkommenden Form des Perlitgesteins geeignet ist.

Vorteilhaft sind ebenfalls Additive, deren Granulate selbst poröse Festkörper sind, d. h. ein granulares Material, das eine innere Porosität aufweist. Durch die innere Porosität findet zum Einen eine mechanische Schwächung der Granulate statt, zum Anderen wirkt sich die innere Porosität vorteilhaft bei der Erzeugung einer möglichst großen Oberfläche durch den Partikelbruch aus. Als besonders vorteilhaft erweist sich hier die Verwendung geblähten Perlitgesteins, welches sich dadurch auszeichnet, dass während des Blähvorgangs im Perlitgestein enthaltenes Kristallwasser eine innere Porosität in den Granulaten des Perlitgesteins erzeugt.

Neben einem günstigen Preis weist das Perlitgestein weitere Merkmale auf, die bei der Auswahl des eigentlichen Strahlmittels und des passenden Additivs vorteilhaft sind. So ist es gesundheitlich unbedenklich, nicht umweltschädlich und kann keine Staubexplosion verursachen. Insbesondere beim Einsatz von Trenngeräten wie Sichtern und/oder Zyklonabscheidern kann Perlitgestein zur Unterdrückung der Brand- und/oder Explosionsgefahr beitragen. Es kann im zerkleinerten Zustand leicht vom übrigen benutzten Strahlmittel abgetrennt werden und weist keine das Werkstück schädigenden, beispielsweise korrosiven Eigenschaften auf. Wenn das zerkleinerte Perlitgestein durch Filter aus der Prozessabluft abgeschieden wird, trägt es zudem zur Erleichterung der Reinigung der Filter durch seine fettbindende Wirkung bei.

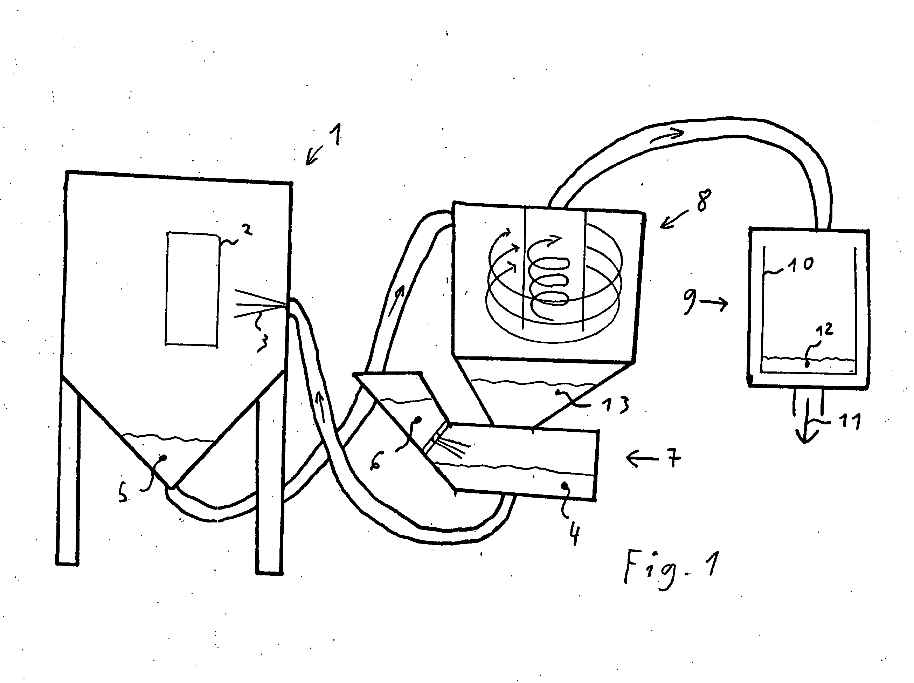

Die Erfindung wird im Folgenden anhand der Figur 1, die eine schematische Abbildung einer beispielhaften erfindungsgemäßen Vorrichtung zeigt, schematisch näher erläutert.

Die beispielhafte erfindungsgemäße Vorrichtung weist eine Strahlvorrichtung 1 auf, in der der Strahl 3 auf das Werkstück 2 trifft. Das benutzte Strahlmittel 5 wird aufgefangen und der Aufbereitungseinrichtung 8 zugeführt. In dieser wird nach dem Prinzip eine klassierenden Zyklonabscheiders oder Windsichters eine erste Fraktion 13, die im Wesentlichen das eigentliche Strahlmittel sowie den unzerkleinerten Anteil des Additivs enthält, abgeschieden und von einer zweiten Fraktion 12 getrennt, die vorzugsweise durch einen Trägerluftstrom ausgetragen wird und den zerkleinerten Anteil des Additivs sowie Abrieb von Werkstück und/oder Strahlmittel und die aus dem Prozess zu entfernenden Verunreinigungen enthält. Die zweite Fraktion 12 kann mit einem Filter aus dem Trägerluftstrom entfernt werden, von dem dann lediglich unbelastete Abluft zurückbleibt.

Erfindungsgemäß ist eine Vorrichtung 7 zum dosierten Zuführen des granularen Additivs 6 vorhanden, die dazu dient, das Additiv der im Kreislauf geführten Strahlmittel 5 zuzusetzen und vorteilhafterweise das zugesetzte Additiv derart dosiert, dass auch bei längerem Betrieb der Vorrichtung der Anteil des Additivs an der Strahlmittelmischung 5 weitestgehend konstant bleibt.

## Patentansprüche

1. Strahlmittel (4), wenigstens ein Mittel zur mechanischen Bearbeitung von Oberflächen, insbesondere Stahl- oder Gussperlen, aufweisend, wobei ein Additiv (6) für die Entfettung und Reinigung der zu strahlenden Oberfläche (2) und/oder des Strahlmittels vorgesehen ist, welches ein granulares Material umfasst, welches unter den mechanischen Beanspruchungen, denen das Strahlmittel (4) während des Strahlverfahrens unterliegt, eine geringere Bruchfestigkeit aufweist als das mindestens eine Mittel zur mechanischen Bearbeitung von Oberflächen selbst,
**dadurch gekennzeichnet,**
**dass** es sich bei dem Additiv (6) um Perlitgestein, insbesondere geblähtes Perlitgestein handelt.

2. Strahlmittel (4) nach Anspruch 1,
**dadurch gekennzeichnet,**
**dass** es sich bei dem Additiv (6) um granulares Material handelt, dessen Granulate eine innere Porosität aufweisen.

3. Strahlverfahren, bei dem in einem Strahlvorgang ein Strahlmittel (4) nach einem der Ansprüche 1 oder 2 auf ein Werkstück (2) gestrahlt wird, wobei die Granulate des Additivs (6) während des Strahlvorgangs zumindest zum Teil zerkleinert werden,
**dadurch gekennzeichnet,**
**dass** der zerkleinerte Anteil des Additivs während des Aufbereitungsvorgangs aus dem Kreislauf des Strahlmittels abgeschieden wird.

4. Strahlverfahren nach Anspruch 3,
**dadurch gekennzeichnet,**
**dass** das benutzte Strahlmittel (5) aufgefangen und nach einem Aufbereitungsvorgang wieder dem Strahlvorgang zugeführt wird.

5. Strahlverfahren nach einem der Ansprüche 3 oder 4,
**dadurch gekennzeichnet,**
**dass** dem Kreislauf des Strahlmittels (4) ein Additiv (6) zugeführt wird, wobei vorzugsweise das Mengenverhältnis zwischen Additiv (6) und Strahlmittel im Kreislauf des Strahlmittels (4) durch eine Regelung konstant gehalten wird.

## Claims

1. Abrasive medium (4), having at least one medium for mechanically treating surfaces, more particularly steel or cast iron beads, wherein an additive (6) is provided for degreasing and cleaning the surface (2) which is to be blasted, and/or the abrasive medium, which comprises a granular material which under the mechanical stresses to which the abrasive medium (4) is subjected during the blasting process, has a lower breaking strength than the at least one medium for mechanically treating the surfaces themselves,
**characterised in that**
the additive (6) is perlite stone, more particularly expanded perlite stone.

2. Abrasive medium (4) according to claim 1
**characterised in that**
the additive (6) is a granular material whose granules have an internal porosity.

3. Abrasion method in which in a blasting process an abrasive medium (4) according to one of claims 1 or 2 is blasted onto a workpiece (2) wherein the granules of the additive are pulverised at least in part during the blasting process,
**characterised in that**
the pulverised proportion of the additive during the preparation process is separated from the circuit of the abrasive medium.

4. Abrasion method according to claim 3
**characterised in that**
the used abrasive medium (5) is collected up and after a preparation process is supplied again to the blasting process.

5. Abrasion method according to one of claims 3 or 4
**characterised in that**
an additive (6) is supplied to the circuit of the abrasive medium (4) wherein the proportion between the amount of additive (6) and amount of abrasive medium in the circuit of the abrasive medium (4) is advantageously kept constant through a regulator.

## Revendications

1. Agent de grenaillage (4) qui comprend au moins un agent de traitement mécanique de surfaces, en particulier des billes d'acier ou de fonte, sachant qu'est prévu un additif (8) qui, destiné à dégraisser et à nettoyer la surface à grenailler (2) et/ou l'agent de grenaillage, comprend un matériau granulé qui, en présence des contraintes mécaniques auxquelles l'agent de grenaillage (4) est soumis pendant le processus de grenaillage, présente une résistance à la rupture inférieure à celle de l'agent de traitement mécanique de surfaces au moins prévu,
**caractérisé en ce que**
l'additif (6) consiste en grenaille de perlite, en particulier de grenaille de perlite gonflée.

2. Agent de grenaillage (4) selon la revendication 1,
**caractérisé en ce que**
l'additif (6) consiste en un matériau granulé dont les grains présente une porosité interne.

3. Procédé de grenaillage dans lequel, au cours d'un processus de grenaillage, un agent de grenaillage (4) selon l'une des revendications 1 et 2, est grenaillé sur une pièce à usiner (2), sachant que les grains de l'additif (6) sont fragmentés, au moins partiellement, pendant le processus de grenaillage,
**caractérisé en ce que**
la partie fragmentée de l'additif est éliminée du circuit d'agent de grenaillage pendant le processus de traitement.

4. Procédé de grenaillage selon la revendication 3,
**caractérisé en ce que**
l'agent de grenaillage (5) utilisé est capté et reconduit au processus de grenaillage après une opération de traitement.

5. Procédé de grenaillage selon l'une des revendications précédentes,
**caractérisé en ce que**
un additif est ajouté dans le circuit de l'agent de grenaillage (4), sachant que, de préférence, le rapport quantitatif entre l'additif (46) et l'agent de grenaillage est maintenu constant dans le circuit d'agent de grenaillage (4) par une régulation.
